# FASCICULE DE BREVET EUROPEEN

(11) **EP 3 699 008 B1**
(45) Date de publication et mention de la délivrance du brevet: **23.08.2023**
(21) Numéro de dépôt: 20153655.4
(22) Date de dépôt: 24.01.2020
(51) Int. Cl.: B60K 6/48, B60K 6/40, F16H 3/089

(54) **DISPOSITIF DE TRACTION HYBRIDE DE VÉHICULE AUTOMOBILE**
HYBRIDANTRIEBSVORRICHTUNG EINES KRAFTFAHRZEUGS
HYBRID DRIVE DEVICE OF A MOTOR VEHICLE

(30) Priorité: 21.02.2019 FR 1901764
(43) Date de publication de la demande: 26.08.2020
(73) Titulaire: Renault s.a.s, 92100 Boulogne Billancourt (FR)
(72) Inventeur: BRIEC, Alain, 78084 Guyancourt (FR); LEHONGRE, Claude, 78084 Guyancourt (FR); RAOUL, MICHEL, 78990 ELANCOURT (FR)
(74) Mandataire: Renault Group

(56) Documents cités:
- EP-A1- 2 679 424
- WO-A1-2013/007886
- FR-A1- 3 031 477

## Description

L'invention concerne un dispositif de traction hybride pour véhicule automobile comportant un moteur thermique avec sa boîte de vitesses manuelle ou robotisée, et une machine électrique connectée à la boîte de vitesses.

Plus précisément, elle a pour objet un dispositif de traction hybride pour véhicule automobile comportant une boîte de vitesses à arbres parallèles, dont un arbre primaire transmet la puissance d'un moteur thermique d'entraînement à un arbre secondaire relié aux roues du véhicule, et une machine électrique qui transmet sa puissance sur deux rapports à l'arbre secondaire.

Dans les véhicules hybrides comportant une double motorisation, thermique et électrique, la machine électrique est parfois liée au moteur thermique sur sa face dite « accessoires », comme l'alternateur. Pour augmenter la puissance électrique installée, et l'efficacité des échanges d'énergie de stockage en batterie et de restitution, il est plus avantageux de connecter la machine électrique à la boîte de vitesses. Cette disposition permet d'ouvrir ces véhicules à des possibilités nouvelles, en particulier le roulage en mode électrique, et à consommation réduite.

On connaît des groupes motopropulseurs hybrides, dont la machine électrique est connectée à l'un ou à l'autre des arbres de la boîte de vitesses.

Lorsqu'elle est liée avec l'arbre primaire, la machine électrique bénéficie des rapports de réduction de la boîte, mais perturbe l'inertie et la traînée équivalente de celui-ci. Pour que cette perturbation soit supportée par les dispositifs de synchronisation, il est nécessaire d'automatiser les changements de rapport. Un superviseur pilote alors la machine électrique pendant les changements de rapport, et limite, ou supprime, les effets indésirables d'inertie et de traînée. Dans certains cas, la machine électrique peut réaliser à elle seule la synchronisation, et les synchroniseurs classiques sont supprimés. Toutefois, cette architecture présente l'inconvénient important suivant : puisque la machine électrique est découplée des roues pendant le changement de rapport, elle ne peut pas assurer la continuité d'accélération complète, ou partielle, qui permettrait d'améliorer la prestation de passage des vitesses d'une boîte de vitesses robotisée.

Lorsque la machine est liée à l'arbre secondaire, elle est capable de restituer (ou d'échanger) de l'énergie en permanence, y-compris pendant les changements de rapports. Elle ne bénéficie plus des rapports de la boîte, et a besoin d'une liaison dédiée avec l'arbre secondaire, par exemple une chaîne ou des couples de pignons.

Lorsqu'elle est liée en permanence aux roues, la machine électrique peut devenir, dans certaines circonstances, la seule source de traction du véhicule. Pour augmenter l'apport en couple à la roue par cette machine à basse vitesse, ou pour faire décoller le véhicule à partir de l'arrêt en mode électrique, il faut une forte démultiplication. Pour continuer à utiliser la même machine à vitesse plus élevée, il faut une démultiplication plus faible. Enfin, pendant certaines phases de roulage, comme par exemple en vitesse stabilisée sur autoroute, il n'y a pas, ou très peu, d'échanges d'énergie entre la roue du véhicule et le système de motorisation électrique. Il peut alors être préférable de déconnecter la machine électrique, afin de limiter les pertes liées à son entraînement. Pour satisfaire à toutes ces exigences, le mécanisme de connexion de la machine électrique avec la roue, peut avantageusement disposer de deux rapports, et d'une position neutre.

La publication DE 10 2016 120 010, décrit un groupe motopropulseur comportant un moteur thermique, une boîte de vitesses, et une machine électrique. L'arbre du rotor de la machine électrique porte un premier pignon qui met en mouvement un premier arbre comportant deux pignons fixes, à l'aide d'un pignon intermédiaire. Un deuxième arbre porte deux pignons fous, un groupe de crabotage, et possède à son extrémité un pignon fixe qui engrène avec la couronne du différentiel. A l'intérieur de la boîte de vitesses, qui est dédiée au moteur thermique, une seconde boîte à deux rapports dédiés à la machine électrique est ajoutée. La deuxième boîte de vitesses peut aussi être disposée à l'extérieur de la première.

Cet ensemble de transmission de puissance, forme une excroissance vers le bas, sous la boîte de vitesses, qui est difficilement compatible avec la garde au sol du véhicule.

La publication WO 2013/007886 A1 divulgue un groupe motopropulseur dans lequel la puissance d'une machine électrique s'applique également directement à la couronne d'un différentiel.

La publication EP 2 679 424 A1 divulgue un groupe motopropulseur hybride ayant un chemin de transmission de puissance électrique alternatif.

Pour pallier cet inconvénient, l'invention propose un autre chemin de transmission de puissance entre la machine électrique et l'arbre secondaire.

Conformément à l' invention comme définie dans la revendication 1, le chemin de transmission de puissance entre la machine électrique et l'arbre secondaire de la boîte passe par un pignon de transfert tournant fou autour de l'arbre primaire.

Selon un mode de réalisation particulier de l'invention, le pignon de transfert est celui du troisième rapport de marche avant de la boîte.

Ce pignon de transfert permet de réaliser la plus forte démultiplication de couple pour la machine électrique sur son rapport court de transmission.

La présente invention sera mieux comprise à la lecture de la description suivante d'un mode de réalisation non limitatif de celle-ci, en se reportant aux dessins annexés, sur lesquels.
[Fig. 1] est une vue en coupe longitudinale du dispositif complet, en position de rapport neutre.
[Fig. 2] est une vue en coupe transversale du dispositif complet.
[Fig. 3] est une vue en coupe longitudinale du dispositif complet seul, en position de rapport court, montrant le chemin de transmission de puissance.
[Fig. 4] est une vue en coupe longitudinale du dispositif complet seul, en position de rapport long, montrant le chemin de transmission de puissance.

### Nomenclature

| Repères | |
|---|---|
| 1 | Mécanisme de transmission de puissance |
| 10 | Carter d'embrayage |
| 11 | Carter de mécanisme |
| 12 | Arbre primaire |
| 13 | Arbre secondaire bas des rapports avant |
| 14 | Arbre secondaire haut de marche arrière |
| 15 | Différentiel |
| 16 | Mécanismes de sélection des vitesses |
| 17 | Fourchettes de commande des baladeurs |
| 20 | Machine électrique |
| 21 | Arbre rotor de machine électrique |
| 22 | Onduleur |
| 23 | Connecteur |
| 25 | Pignon, fixe sur arbre rotor |
| 30 | Arbre de descente |
| 31 | Pignon fixe du rapport court |
| 32 | Pignon fixe du rapport long |
| 35 | Pignon fixe de descente |
| 40 | Arbre intermédiaire |
| 41 | Pignon fou rapport court |
| 42 | Pignon fou rapport long |
| 43 | Groupe de crabotage |
| 44 | Fourchette de commande du groupe de crabotage 43 |
| 45 | Moteur d'actionnement fourchette 44 |
| 46,a | Pignon fixe de sortie |
| 46,b | Pignon fou du rapport de 3^{ème}, ou pignon de transfert |
| 46,c | Pignon fixe du rapport de 3^{ème} |
| 50 | Pompe à huile |

### Description

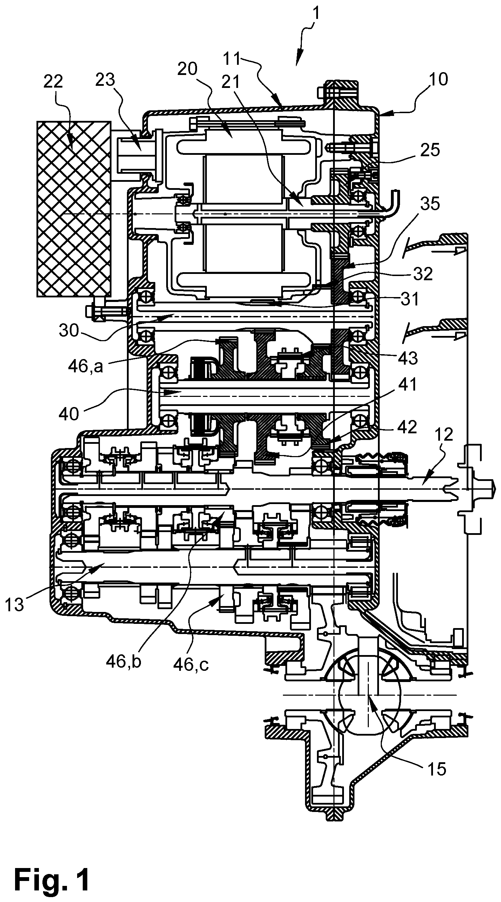

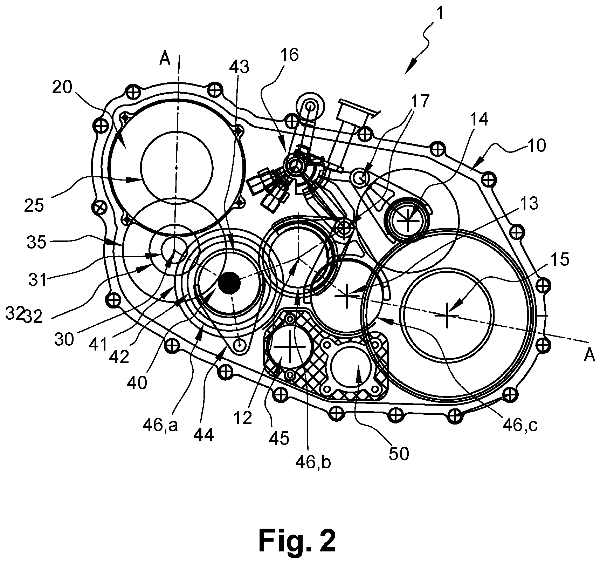

Sur la figure 1, on a représenté en coupe longitudinale, un mode de réalisation du dispositif de traction hybride pour véhicule automobile 1, faisant l'objet de l'invention. Ce dispositif comporte une boîte de vitesses à arbres parallèles 12, 13, dont l'arbre primaire 12 transmet la puissance d'un moteur thermique d'entraînement (non représenté) à un arbre secondaire 13 relié aux roues du véhicule. Il comporte également une machine électrique 20. La machine 20 transmet sa puissance sur deux rapports à l'arbre secondaire 13 de la boîte de vitesses. Le dispositif 1 proposé constitue un dispositif d'hybridation électrique ou de traction hybride complet. Ce dispositif est une extension d'une boîte de vitesses mécanique classique à arbres parallèles. Dans l'exemple de réalisation non limitatif illustré par les figures, c'est une boîte de vitesses manuelle. Elle peut aussi être équipée d'un embrayage automatisé, ou même être entièrement robotisée. Sans sortir du cadre de l'invention, le dispositif proposé peut être réalisé avec une transmission automatique, notamment à double embrayage. La boîte de vitesses à laquelle on vient rapporter un module d'électrification est composée de deux carters, le carter d'embrayage 10 et le carter de mécanisme 11. A l'intérieur des carters 10, 11, on trouve : l'arbre primaire 12, un premier arbre secondaire 13 agencé en partie basse pour les rapports de marche avant, un second arbre secondaire 14 (voir figure 2) agencé en partie haute pour le rapport de marche arrière, un différentiel complet 15, un dispositif de changements de rapports composé d'un ensemble de sélection et passage 16 et des fourchettes de commande des baladeurs 17.

L'hybridation, ou l'électrification de la boîte, consiste à intégrer à l'intérieur de celle-ci une machine électrique 20, dont le rotor est monté sur son arbre 21. Cette machine est alimentée en courant, et commandée, par un onduleur 22 (disposé à l'extérieur des carters 10, 11), liée à celle-ci par le connecteur 23 qui traverse la paroi du carter de mécanisme 11. L'arbre du rotor 21 supporte une première denture 25 qui coopère avec le pignon 35 et permet de transmettre la puissance de la machine à un arbre de descente 30. Cet arbre possède deux pignons fixes 31 et 32, qui constituent les deux pignons menants d'une transmission à deux rapports, pour la puissance fournie par la machine électrique 20, lorsqu'elle est motrice.

L'arbre intermédiaire 40 porte deux pignons fous 41, 42, et un pignon fixe 46,a, entraînant un pignon de transfert 46,b tournant fou autour de l'arbre primaire 12 de la boîte. Les pignons 41, 42, transmettent la puissance de la machine électrique à l'arbre secondaire 13. Ils sont entraînés par des pignons fixes 31, 32, d'un arbre de descente 30, recevant la puissance de la machine électrique sur deux rapports de démultiplication. Le pignon 31 coopère avec le pignon fou 41 pour réaliser le rapport court. Le pignon fixe 32 coopère avec le pignon 42 pour réaliser le rapport long. Les deux pignons 41 et 42 sont fous. Le pignon de transfert 46,b, qui est également fou, transmet à l'arbre secondaire 13 la puissance de l'arbre intermédiaire de transmission 40, entraîné par la machine électrique 20.

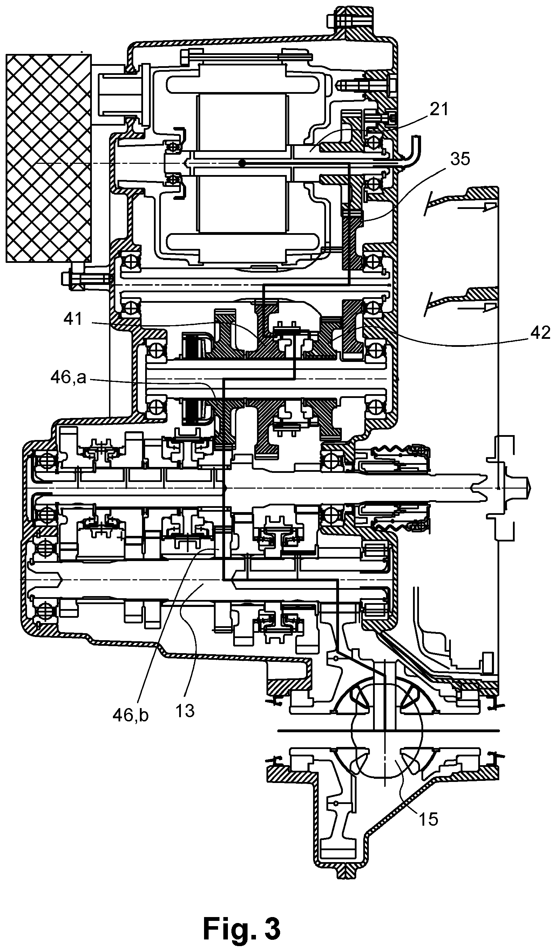

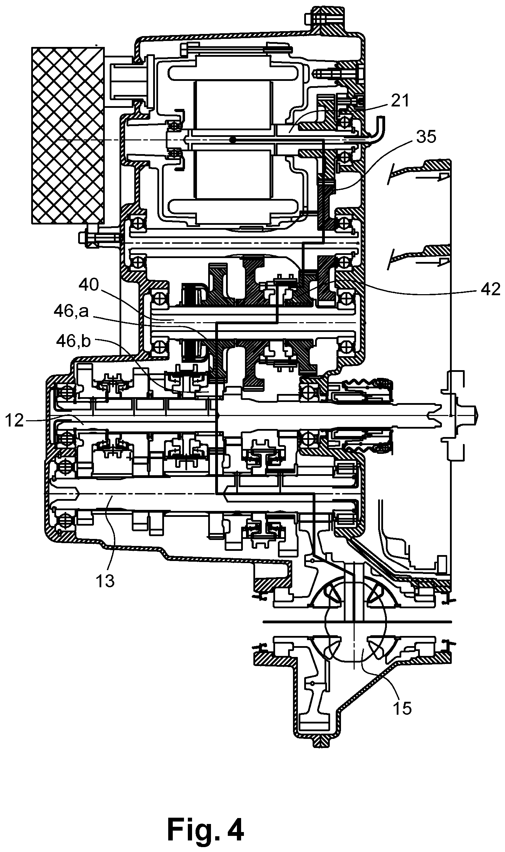

Entre les deux pignons 41, 42 est agencé un groupe de couplage 43 à trois positions : la position centrale correspond à la déconnexion de la machine électrique. C'est la représentation de la figure 1. A gauche, le baladeur crabote le pignon 41 à l'arbre 40, et connecte la machine électrique 20 selon le rapport court. C'est la représentation de la figure 3. on l'on montre la transmission de puissance de la machine au différentiel 15. A droite, le baladeur crabote le pignon 42 à l'arbre 40 et connecte la machine électrique 20 sur le rapport long. C'est la configuration de la figure 4. Les figures 3 et 4 montrent le chemin de puissance, de la machine électrique 20 au différentiel. Sur les deux figures, le chemin de transmission de puissance entre la machine 20 électrique et l'arbre secondaire 13 de la boîte, passe le pignon de transfert 46,b, tournant fou autour de l'arbre primaire 12.

Le baladeur 43, disposé entre les deux pignons fous 41, 42, de l'arbre intermédiaire 40, est commandé par un actionneur composé d'une fourchette 44 d'un moteur 45 et d'un mécanisme intermédiaire non représenté. La lubrification, la gestion de la température de l'huile, et la propreté de l'huile, sont assurées par la pompe à huile 50.

Dans le mode de réalisation non limitatif de l'invention illustré par les figures, l'arbre primaire 12 de boîte porte plusieurs pignons fous dont le pignon 46,b. Le pignon de transfert 46,b est le pignon fou du troisième rapport de marche avant de la boîte. Dans cette architecture, le pignon de transfert 46,b est celui qui permet de réaliser la plus forte démultiplication de couple de la machine électrique sur son rapport court de transmission.

## Revendications

1. Dispositif de traction hybride (1) pour véhicule automobile comportant une boîte de vitesses à arbres parallèles, dont un arbre primaire (12) transmet la puissance d'un moteur thermique d'entraînement à un arbre secondaire (13) relié aux roues du véhicule, et une machine électrique (20) qui transmet sa puissance sur deux rapports à l'arbre secondaire (13) de la boîte de vitesses, dans lequel le chemin de transmission de puissance entre la machine électrique (20) et l'arbre secondaire (13), passe par un arbre de descente (30) recevant la puissance de la machine électrique (20), par un arbre intermédiaire de transmission (40), et par un pignon de transfert (46,b) tournant fou autour de l'arbre primaire (12), **caractérisé en ce que** l'arbre intermédiaire (40) porte deux pignons fous (41, 42) entraînés par des pignons fixes (31, 32) de l'arbre de descente (30) recevant la puissance de la machine électrique (20), et un pignon fixe (46,a) entraînant le pignon de transfert (46,b).

2. Dispositif de traction hybride (1) selon la revendication 1, **caractérisé en ce que** les deux pignons fous (41, 42) de l'arbre intermédiaire, transmettent la puissance de la machine électrique (20) à l'arbre secondaire (13) de la boîte sur un rapport court et sur un rapport long de transmission.3

3. Dispositif de traction hybride (1) selon la revendication 1 ou 2, **caractérisé en ce que** l'arbre primaire (12) de la boîte porte plusieurs pignons fous dont le pignon(46,b), le pignon de transfert (46,b) étant celui du troisième rapport de marche avant de la boîte.

4. Dispositif de traction hybride selon la revendication 2 ou 3, **caractérisé en ce que** le pignon de transfert (46,b) permet de réaliser la plus forte démultiplication de couple pour la machine électrique (20) sur son rapport court de transmission.

## Patentansprüche

1. Hybridantriebsvorrichtung (1) für ein Kraftfahrzeug, welche ein Getriebe mit parallelen Wellen, von denen eine Primärwelle (12) die Leistung eines Antriebsverbrennungsmotors auf eine mit den Rädern des Fahrzeugs verbundene Sekundärwelle (13) überträgt, und eine elektrische Maschine (20), welche ihre Leistung mit zwei Übersetzungen auf die Sekundärwelle (13) des Getriebes überträgt, aufweist, wobei der Leistungsübertragungsweg zwischen der elektrischen Maschine (20) und der Sekundärwelle (13) über eine Vorgelegewelle (30), welche die Leistung der elektrischen Maschine (20) aufnimmt, über eine Getriebezwischenwelle (40) und über ein Übertragungsritzel (46,b), das sich frei um die Primärwelle (12) dreht, verläuft, **dadurch gekennzeichnet, dass** die Zwischenwelle (40) zwei sich frei drehende Ritzel (41, 42), die von festen Ritzeln (31, 32) der Vorgelegewelle (30), welche die Leistung der elektrischen Maschine (20) aufnimmt, angetrieben werden, und ein festes Ritzel (46,a), welches das Übertragungsritzel (46,b) antreibt, trägt.

2. Hybridantriebsvorrichtung (1) nach Anspruch 1, **dadurch gekennzeichnet, dass** die zwei sich frei drehenden Ritzel (41, 42) der Zwischenwelle die Leistung der elektrischen Maschine (20) auf die Sekundärwelle (13) des Getriebes mit einer kurzen Übersetzung und mit einer langen Übersetzung überträgt.

3. Hybridantriebsvorrichtung (1) nach Anspruch 1 oder 2, **dadurch gekennzeichnet, dass** die Primärwelle (12) des Getriebes mehrere sich frei drehende Ritzel trägt, darunter das Ritzel (46,b), wobei das Übertragungsritzel (46,b) dasjenige des dritten Vorwärtsgangs des Getriebes ist.

4. Hybridantriebsvorrichtung (1) nach Anspruch 2 oder 3, **dadurch gekennzeichnet, dass** das Übertragungsritzel (46,b) ermöglicht, die stärkste Drehmomentuntersetzung für die elektrische Maschine (20) bei ihrer kurzen Übersetzung zu realisieren.

## Claims

1. Hybrid traction device (1) for a motor vehicle comprising a parallel gearbox of which a primary shaft (12) transmits the power from a drive combustion engine to a secondary shaft (13) connected to the wheels of the vehicle, and an electric machine (20) which transmits its power on two gear ratios to the secondary shaft (13) of the gearbox, wherein the path along which power is transmitted between the electric machine (20) and the secondary shaft (13) passes via a stepdown shaft (30) that receives the power from the electric machine (20), via an intermediate transmission shaft (40) and via a transfer pinion (46b) idling around the primary shaft (12), **characterized in that** the intermediate shaft (40) bears two idling pinions (41, 42) driven by fixed pinions (31, 32) of the stepdown shaft (30) receiving the power from the electric machine (20), and a fixed pinion (46a) driving the transfer pinion (46b).

2. Hybrid traction device (1) according to Claim 1, **characterized in that** the two idling pinions (41, 42) of the intermediate shaft transmit the power from the electric machine (20) to the secondary shaft (13) of the gearbox on a short transmission ratio and on a long transmission ratio.

3. Hybrid traction device (1) according to Claim 1 or 2, **characterized in that** the primary shaft (12) of the gearbox bears several idling pinions including the pinion (46b), the transfer pinion (46b) being the pinion for the third forward gear ratio of the gearbox.

4. Hybrid traction device according to Claim 2 or 3, **characterized in that** the transfer pinion (46b) makes it possible to achieve the greatest demultiplication of torque for the electric machine (20) on its short transmission ratio.
